# EUROPEAN PATENT APPLICATION

(11) **EP 2 672 374 A1**
(43) Date of publication of application: **11.12.2013**
(21) Application number: 12170900.0
(22) Date of filing: 05.06.2012
(51) Int. Cl.: G06F 3/048

(54) **Detection of circular motion in a two-dimensional space**

(71) Applicant: algoriddim GmbH, 80539 München (DE)
(72) Inventor: Seiffert, Frederik, 80333 München (DE)
(74) Representative: Kudlek & Grunert Patentanwälte

(57) **Abstract**

The invention refers to automatically identifying a circular arc (Γ) represented by a motion (γ) of an input means (1) of an electronic device (2). The motion (γ) of the input device is electronically tracked, and a current position (A) of the input means is detected, wherein the current position corresponds to a current point ((xₙ, yₙ)) in a two-dimensional coordinate system. A second ((xⱼ, yⱼ)) and a third point ((xₖ, yₖ)) in the two-dimensional coordinate system are identified, the second and the third point corresponding to a second (B) and third position (C), respectively, which have been passed by the input device. From the current, the second and the third point, a radius (r) and coordinates of a centre (X) of the circular arc represented by the motion of the input means are calculated.

## Description

The invention refers to automatically identifying a circular arc represented by a motion of an input means of an electronic device.

Functions of modem electronic devices can often be operated by continuous movements of input means, such as a computer mouse, or a finger or stylus moved on a touch-sensitive surface. Thereby, cursor points can be positioned, virtual buttons can be activated, virtual latches can be shifted, virtual wheels can be scrolled and so on. The electronic device automatically detects the respective movements, interprets them and accordingly processes them to operations.

The technique of operating a device by continuously moving an input means is, in particular, provided for controlling a reproduction of media such as music, pictures or a film. Document US 2012 079 386 A1 discloses controlling a playback speed of an image by using a drag movement of a user's finger on a video reproduction screen image.

From document US 2008/ 084400 A1, a touch gesture control of video media play on handheld media players is known. Therein, the media player is configured to selectively control the playing of a piece of video media in response to a user imparting a unique touch gesture upon the screen of the media player. For instance, linear finger swipes in respective directions cause a fast forward or rewind operation, and circular swipes are mapped to a play-from-beginning function.

It would be desirable, however, to be able to automatically identify details of free-handed curved motions of an input means, so as to be able to more sensitively control a device based on those details.

The present invention refers to a method, at least one computer-readable medium and a device with the features of the independent claims.

The method according to the present invention allows for automatically identifying a circular arc represented (i.e., approximately characterised) by a motion of an input means of an electronic device (e.g., of a media player). The input device may be, for instance, a computer mouse, a finger or stylus contacting a touch sensitive surface, a laser pointer irradiating a light sensitive surface, or a light fixture irradiating a surface observed by a light sensitive device such as a digital camera or the like. The motion may be caused by a user of the electronic device.

The method comprises electronically tracking the motion of the input device, such as by recording positions the input means passes as data in a computer readable medium or in a memory of the electronic device. The method further comprises detecting a current position of the input means, the current position corresponding to a point (further referred to as "current point") in a two-dimensional coordinate system. As is understood in the art, such a two-dimensional coordinate system (e.g., a Cartesian coordinate system) may have been arbitrarily chosen to uniquely identify the positions the input means passes. Preferably, the scales of the coordinate system correspond to a resolution of the device, such as to touch sensitive pixels thereof, which may have been mapped in the unit square, for instance.

A second and a third point in the two-dimensional coordinate system are further identified, the second and the third point corresponding to a second and third position, respectively, which have been passed (prior to the current position) by the input device.

The method according to the present invention further includes a step of calculating, from the current, the second and the third point, a radius and coordinates of a centre of the circular arc represented by the motion of the input means.

The term "current position" as used herein refers to a position the input means has at a particular point in time which preferably is the last one tracked. During the method execution of the method, the input means may reach a new position, in particular when an executing processing unit is slower than the user's movement of the input means. The denomination may thus be made outdated. It is noted that the "current position" and "current point" might be likewise called a "first position" and "first point", respectively, to distinguish them from the second and third positions and points, respectively. However, to avoid an interpretation that the ordering given by such ordinal numerals corresponds to an order the positions are passed by the input means, the adjective "current" is used instead. The "current position" is, therefore, to be understood as the position which is considered by the method as the one the input means has most recently reached.

The method of the present invention thus provides the advantage of automatically identifying the parameters defining the circular arc represented by a motion of the input device, wherein no further requirements restrict the moving of the input means. In particular, it allows deliberating the user from having to move the input means around a specific centre point or with a particular radius or within in a predetermined field in order that the circular motion be properly recognised. Moreover, the motion does not have to be a closed or at least almost closed curve. Instead, a circular arc specified by the movement of the input means is sufficient to identify the motion. Therefore, the method allows a sensitive interpretation of an input means being moved.

The method of the present invention may be stored on at least one computer readable medium, in terms of computer-readable instructions which, when they are executed by a computing device, perform the method.

The device according to the present invention is configured to render electronic media (such as video media) on a touch sensitive display screen including a plurality of touch sensitive cells. Therein, each of the plurality of touch sensitive cells is configured to serve, responsive to the motion of the input means, as the current position, the second position and the third position. The device is further configured to execute instructions so as to perform the method of the present invention in any of its embodiments.

Therefore, when a user moves the input means in a curved-shaped trajectory, the touch sensitive cells capture the movement, and the device can identify a circular arc represented by the motion, by calculating the parameters determining it. Thereby, the requisites are provided for the device interpreting the motion properly as instructions intended by the user, such as to influence the rendering of a currently played (e.g., displayed) electronic medium.

Preferably, the coordinates of the centre of the circular arc (and/or its radius) is (are) calculated by computing the coordinates of the circumcentre (and/or the circumradius) of the triangle defined by the current, the second and the third point. The motion of the input means is thus approximated by the circular arc defined by those three points, the parameters of the circular arc being easily computable.

In a preferred embodiment, a stream of two or more points of the two-dimensional coordinate system is recorded in an array data structure, the stream of points corresponding to a sequence of positions which have been successively passed by the input means. Therein, appropriate indices in the array data structure preferably correspond to the order the positions have been passed by the input means. The current point is preferably inserted into the array data structure, e.g. at its end.

In a preferred embodiment, a point corresponding to a last position passed, by the input means, prior to the current position is selected. In embodiments where a stream of points corresponding to passed positions is recorded in an array data structure as described above, said point may be selected as the point whose index, in the array data structure, is the index of the current point decremented by one.

With respect to the calculated centre and the radius of the circular arc, the rotational angle between the current point and the selected point and/or a corresponding angular velocity may be determined. This angle and/or angular velocity may be further used to control an element (such as a timeline) in a software system. In particular, it may be used to control a play function and/or a replay function when rendering an electronic medium such as a music medium or a video medium.

For example, the dimension of the angular velocity may be related to a speed of a play function (which may be in a forward direction and/or a rewind function) to be applied when rendering an electronic medium. For instance, a first angular velocity may correspond to a first speed of the play function (forward or backward), whereas a second velocity may correspond to a second speed of the play function. Likewise, the direction of the rotational velocity may determine whether the medium is to be rendered in a forward or a reverse direction, e.g. whether a rewind or a (fast or regular) forward function is to be applied.

The motion's variation between the penultimate and the last (current) position can thus be transferred into an operation of the device. As the rotational angle is independent of the particular size of the motion, its consideration allows for capturing a user's intention, while disregarding personal preferences or characteristics of a user's hand moving the input means.

The step of identifying the second point may comprise searching the tracked positions the input means has passed, such as starting by the current position and proceeding in an order that is reversed to the order the positions have been passed. In embodiments where a stream of points corresponding to passed positions is recorded in an array data structure as described above, this array data structure or a portion thereof may be searched in this manner, starting with the index corresponding to the current point and descending it successively.

The second point may be identified as a point having, among the points of the stream, a maximum distance to the current point. This provides the advantage that the motion of the input means is represented by a most extended circular arc, which may improve the accuracy of the computations of the centre and radius. Moreover, imprecisions in the user's movement may be thus disregarded, as the general curvature of the motion is considered rather than small details thereof.

Alternatively, the second point may be identified as a first point for which, when the stream is examined starting with the current point and successively descending the index, the distance of the respectively considered point to the current point in the coordinate system is larger than the distance of the next point (as considered in said order) to the current point. Stated differently, when considering the positions of the input means backwards from the current position on, the second point may be identified as the last point before the distance to the current point decreases.Thereby, a trade-off between the accuracy of the parameter's calculation and the computational effort can be achieved. The comparison involved in those steps may include disregarding a decrement smaller than a predetermined error threshold (e.g., 0.01), so as to account for fluctuations in point coordinates.

In a preferred embodiment, when the second point is identified in the array data structure, any entries thereof having a smaller index than the second point are removed from the array data structure. Thereby, the array data structure can be kept manageable, and memory space can be saved.

The third point is preferably identified as a point maximising, among the points corresponding to positions between the second and the current position, the distance to the line connecting the current point and the second point.

In a particular embodiment, the method may include a step of verifying that the distance d between the third point and the line connecting the current point and the second point, is larger than a certain threshold (e.g., 0.01). Alternatively or additionally, it may comprise a step of verifying that the third point is positioned roughly in the middle between the current and the second point. This may avoid detecting a circular arc followed by a straight line. The method may further include a step of verifying that a difference between the double distance 2d and the distance between the current and the second point is within a predetermined interval, such as [-0.05, 0.05] or [-0.01, 0.01]. Thereby, detecting oval motions can be avoided, should this be desired.

Alternatively or additionally, the method may comprise verifying the existence of a fourth point maximising, among the points corresponding to a position the input means has passed after the third and before the current position, the distance to the line connecting the third and the current point, or to the calculated centre point of the circular arc. Thereby, a detection of an L-shaped figure as a circle can be avoided. This embodiment may further include a step of verifying that the distance between the fourth point and the line connecting the third and the current point exceeds a predetermined threshold (e.g., 0.0005). In embodiments where an array data structure is used as described above, the method may include a step of verifying that an index corresponding to the fourth point is roughly in the middle between the indices of the third and of the current points.

In a particular preferred embodiment, the motion of the input means is superimposed and tracked on a display while the latter is rendering an electronic medium. For instance, the input means may be moved by the user on the moving images of a video.

Preferably, the motion proceeds after the input means passes the position which above was referred to as the "current position", possibly after a relocation of the input means. Any of the above mentioned embodiments may then correspond to a first point in time. The method may then further include the corresponding steps for a second point in time, wherein a new current position, a new second position and a new third position (eventually, even a new fourth position) replace the current, the second and the third positions (eventually the fourth position). In this embodiment, the method thus includes a step of looping back accordingly. The method may include a step of detecting an interruption or halt of the motion, a reversion of a circular direction thereof and/or a relocation of the input means.

As mentioned above, the dimension of the rotational velocity of the input means with respect to the calculated centre may determine a speed of a rendering function, such as a speed of a rewind or of a (fast-)forward function, and the direction of the rotational velocity may determine which function (e.g., regular forward/ fast-forward or rewind) is to be applied. Thus, when a dimension of the rotational velocity changes from a first to a second point in time, a play function (such as (fast-)forward or rewind) for rendering an electronic medium may be controlled so as to change its speed accordingly. Additionally or alternatively, a halt of the motion may cause a halt of the display or a regular display of the electronic medium, and/or a reversion of the motion's direction may cause a transition from a (fast-)forward to a rewind function (or reversely).

For instance, when a user watches a video, at a first point in time he may be moving an input means at a first portion of the display. Thereby, he may control a function such as fast-forward. He may then spot some detail he is interested in, and he may wish to slow down the rendering of the video, by moving the input means accordingly. The interesting feature may further be about to be hidden by the input means. The user may then relocate the input means to another position of the display of the electronic device, and move the input means in a curve-shaped trajectory which again approximates a circular arc. The new circular arc of the new motion may be automatically identified in any of the ways described herein.

In a particularly preferred embodiment of the device of the present invention, a large portion of the display screen is susceptible for detecting an input means being moved thereon. For example, at least half or at least three quarters or even all of the area of the disclay screen may be covered by touch sensitive cells. As a consequence, a user may move an input means over arbitrary or at least almost every positions of the screen in order to control a display function of an electronic medium being rendered, and the motion may be automatically identified as detailed above.

### Brief description of the figures

- Figure 1A: explains first steps of an exemplary embodiment of the present invention
- Figure 1B: explains further steps of the exemplary embodiment of the present invention
- Figure 2: depicts an exemplary array data structure which may be used in an embodiment of the present invention.

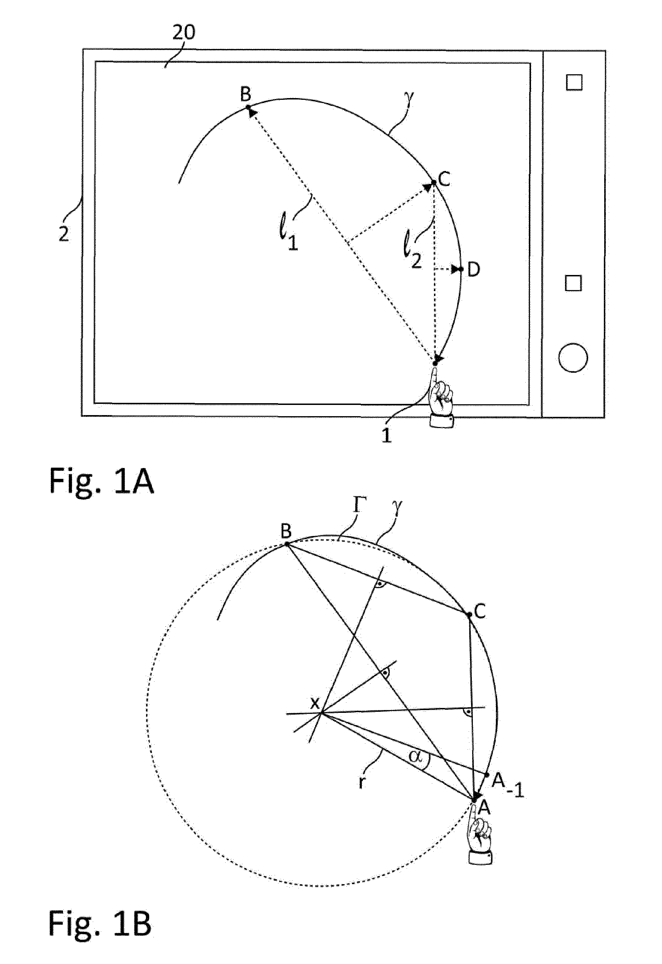

As is schematically shown in Figure 1A, a user's finger 1 has moved over a display 20 of an electronic device 2. The display includes a plurality of touch sensitive cells (not shown) forming a touch sensitive surface and rendering the user's finger an input device. By the touch sensitive surface, the movement is tracked, as adumbrated by the curve γ. The curve represents (approximates) an (intended) circular arc Γ, as indicated in Figure 1B.

At the point in time shown, the input device (i.e., the finger) 1 is positioned at the current position A, which may be expressed as a point in a two-dimensional coordinate system.

Among all points in the curve γ, point B maximises the distance to the current point A and is, therefore, identified as the second point. Among all points lying, on the curve γ, between points A and B, point C maximises the distance to the line ℓ₁, connecting A and B. Therefore, C is identified as the third point. Similarly, among all points lying, on the curve γ, between points A and C, point D maximises the distance to the line ℓ₂ connecting A and C. The existence of such a point (a "fourth point" in the terminology used above) having this property can thus be verified, as can its property of being, on the curve γ, roughly in the middle between points A and C, and having a noteworthy distance to the line ℓ₂.

As can be seen in Figure 1B, point X is a centre point of a circumcentre of the triangle given by the points A, B and C. As described above, according to an embodiment of the present invention, the centre point of the circular arc Γ represented by the input means' motion is calculated by computing X. The curve γ is thus identified as a representation (approximation) of a circular arc Γ having radius r and centre point X.

As can be further seen in Figure 1B, a point A₋₁ is selected, the point A₋₁ corresponding to the last (discretised) position the finger 1 has passed before reaching the current position A. With respect to the identified circular arc (i.e., with respect to the centre point X and the radius r) a rotational angle α between A and A₋₁ is calculated. As mentioned above, this rotational angle α may be used to control an element in a software system, e.g. to control a function in a rendering system for a video or music medium.

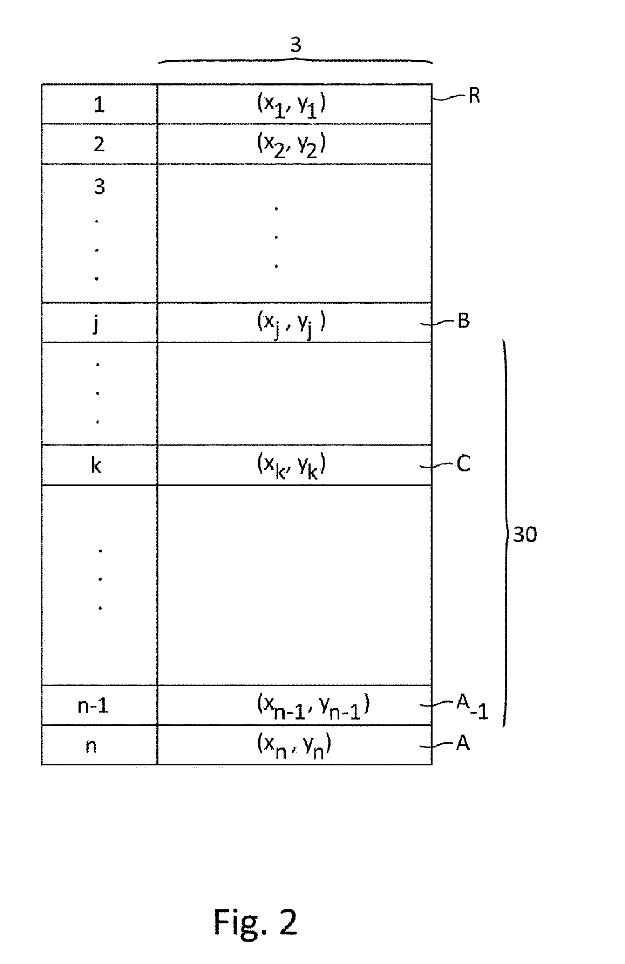

In Figure 2, an exemplary array data structure R is shown, as it may be used in embodiments of the present invention. The array data structure R is depicted to include two columns, the second of which includes a stream 3 of points (xᵢ, yᵢ) of a two-dimensional coordinate system, the points corresponding to positions an input means may have passed. The first column includes indices corresponding to the points.

The last point (xₙ, yₙ) in the array shown may be a current point as described above, such as the current point A marked in Figures 1A and 1B. Further points (xⱼ, yⱼ) and (xₖ, yₖ) are identified to be the second point B and the third point C, respectively.

The stream 3 includes a portion 30 of points corresponding to positions that have been passed, by the input means, after the second position B and before the current position A.

The penultimate entry (xₙ₋₁, yₙ₋₁) in the stream 3 of the array data structure R corresponds to the position A₋₁ the input means passed immediately prior to the current position A. As described above, a rotational angle α with respect to the centre X of the circular arc Γ and between A and A₋₁ may be calculated based on (xₙ₋₁, yₙ₋₁), such as to control a functions concerning the rendering of a video medium or a music medium.

## Claims

1. Method for automatically identifying a circular arc (Γ) represented by a motion (γ) of an input means (1) of an electronic device (2), the method comprising
electronically tracking the motion (γ) of the input device,
detecting a current position (A) of the input means, wherein the current position corresponds to a current point ((xₙ, yₙ)) in a two-dimensional coordinate system; and
identifying a second ((xⱼ, yⱼ)) and a third point ((xₖ, yₖ)) in the two-dimensional coordinate system, the second and the third point corresponding to a second (B) and third position (C), respectively, which have been passed by the input device,
calculating, from the current, the second and the third point, a radius (r) and coordinates of a centre (X) of the circular arc represented by the motion of the input means.

2. Method according to claim 1, wherein calculating coordinates of a centre of the circular arc (Γ) comprises calculating coordinates of a circumcentre of a triangle defined by the current, the second and the third point.

3. Method according to one of claims 1 or 2, wherein the input device (1) is one of a computer mouse, a finger or stylus contacting on a touch sensitive surface (20), a laser pointer irradiating a light sensitive surface, or a light fixture irradiating a surface observed by a light sensitive device such as a digital camera.

4. Method according to claim 4, wherein recording positions passed by the input means as data comprises
recording a stream (3) of two or more points of the two-dimensional coordinate system in an array data structure (R), the stream of points corresponding to a sequence of positions which have been successively passed by the input means, wherein the array data structure reflects the order the positions have been passed by the input means, and
wherein the current point is preferably inserted into the array data structure.

5. Method according to claim 4, wherein recording positions passed by the input means as data comprises recording a stream (3) of two or more points of the two-dimensional coordinate system in an array data structure (R), the stream of points corresponding to a sequence of positions which have been successively passed by the input means, wherein the array data structure reflects the order the positions have been passed by the input means,
and wherein the current point is preferably inserted into the array data structure.

6. Method according to claim 5, further comprising selecting a point ((xₙ₋₁, yₙ₋₁)) of the stream, preferably the point corresponding to the last position (A₋₁) the input means has passed before the current point;
and calculating a rotational angle (α) with respect to the centre (X) of the circular arc (Γ) and between the current point (A) and the selected point (A₋₁).

7. Method according to claim 6, further comprising controlling, based on the rotational angle, an element, such as a timeline, in a software system,
preferably comprising controlling a play function and/or a replay function, such as fast forward or playback, when rendering a video medium, wherein the input means is preferably moved directly on a display screen displaying the video medium.

8. Method according to one of claims 5 to 7, wherein the second point is one of the points included in the stream, and wherein identifying the second point comprises identifying the second point as a point having, among the points of the stream, a maximum distance to the current point.

9. Method according to claim 8, further comprising removing, from the data array structure (R), all points that correspond to positions the input means has passed before passing the second position.

10. Method according to one of claims 5 to 9, wherein the third point is one of the points included in the stream,
and wherein identifying a third point comprises identifying the third point within a stream portion (30) as a point having, among the points of the stream portion, a maximum distance to a line (ℓ₁) connecting the current point and the second point,
wherein the stream portion (30) consists of those points of the stream (3) of two or more points, which correspond to positions that have been passed, by the input means, after the second position and before the current position.

11. Method according to one of the preceding claims, wherein the current position is the position the input means passes at a first point in time, wherein the motion of the input means is continued, after the first point in time, to represent a new circular arc, and wherein the method further comprises
detecting, at the second point in time, a new current position of the input means, wherein the new current position is represented by a corresponding new current point in the two-dimensional coordinate system; and
identifying a new second and a new third point in the two-dimensional coordinate system, the new second and the new third point corresponding to a new second and new third position, respectively, which have been passed by the input device,
and calculating, from the new current, the new second and the new third point, a new radius and new coordinates of a centre of the new circular arc represented by the motion of the input means.

12. Method according to claim 11, wherein the new second point is identified in a manner analogous to identifying the second point,
and/or the new third point is identified in a manner analogous to identifying the third point,
and/or calculating the new coordinates of a centre of the new circular arc comprises calculating coordinates of a new circumcentre of a triangle defined by the new current, the new second and the new third point.

13. At least one computer readable medium having stored thereon instructions which, when executed by a computing device, perform a method according to one of claims 1 to 12.

14. Device (2) for rendering electronic media such as video media on a touch sensitive display screen (20) including a plurality of touch sensitive cells, wherein the device is configured to execute instructions to perform any one of the methods of claims 1 to 12, wherein each of the plurality of touch sensitive cells is configured to serve, responsive to the motion of the input means, as the current position, the second position and the third position.

15. Device according to claim 14, wherein at least half or at least three quarters or all of the area of the display screen is covered by the plurality of touch sensitive cells.
